# EUROPEAN PATENT APPLICATION

(11) **EP 4 503 281 A1**
(43) Date of publication of application: **05.02.2025**
(21) Application number: 23778988.8
(22) Date of filing: 16.02.2023
(51) Int. Cl.: H01M 50/204, H01M 50/213, H01M 50/233

(54) **BATTERY PACK**

(30) Priority: 29.03.2022 JP 2022054240
(71) Applicant: Panasonic Energy Co., Ltd., Osaka 570-8511 (JP)
(72) Inventor: TAKEDA, Kensaku, Kadoma-shi, Osaka 571-0057 (JP); WAKABAYASHI, Takeaki, Kadoma-shi, Osaka 571-0057 (JP)
(74) Representative: Novagraaf International SA
(86) International application number: PCT/JP2023/005584
(87) International publication number: WO 2023/188958

(57) **Abstract**

In a battery pack, a battery unit is accommodated in an exterior case including a first case and a second case. The first case and the second case are connected by stacking stacking plates of a first peripheral wall and a second peripheral wall at an open end portion. The first peripheral wall connects a first stacking plate stacked on an outer surface, and the second peripheral wall connects a second stacking plate stacked on an inner surface. The second stacking plate is provided with a reinforcement mount portion protruding inward on an inner peripheral surface of the open end portion. Moreover, a fixing screw that penetrates and connects the stacking plates stacked on each other is provided, the fixing screw penetrates the first stacking plate and is screwed into the second stacking plate, and the reinforcement mount portion of the second stacking plate serves as a fixing portion to which the fixing screw is screwed.

## Description

### TECHNICAL FIELD

The present disclosure relates to a battery pack in which a chargeable/dischargeable battery is accommodated in an exterior case.

### BACKGROUND ART

A battery pack in which a large number of secondary battery cells are connected in series and in parallel is used as a power source for a portable electric device such as an electric cleaner or an electric power tool, or as a backup power source for a server or a power source device for home use, business use, or factory use in stationary storage applications, and is also used as a power source for driving an assist bicycle, an electric scooter, an electric cart, or a power source for driving a vehicle such as a hybrid vehicle or an electric vehicle. A lithium ion secondary battery is generally used as a secondary battery cell used in such a battery pack, but the lithium ion secondary battery may lead to an unsafe event accompanied by smoking or ignition due to some abnormality such as penetration of a bolt at the time of collision. In a case where the unsafe event occurs in the battery pack, there is a risk that ignition from the internal secondary battery cell is released to the outside of the battery pack.

As such a battery pack, a structure in which a battery unit including a plurality of secondary battery cells is accommodated in a resin exterior case is adopted. Many exterior cases adopt a structure in which box-shaped first case and second case, each having a peripheral wall around a perimeter of a bottom plate, are connected to each other through an opening. As such an exterior case, for example, there is an exterior case using a fitting structure in which stepped portions formed to have a thin wall thickness are provided on an inner surface of an opening of one case and an outer surface of an opening of the other case, and the stepped portions are fitted to each other are stacked to form a stacked portion for connection. (See PTL 1) This structure has a feature that the first case and the second case can be accurately connected while a thickness of the stacked portion of the first case and the second case is the same as a thickness of other peripheral wall portions.

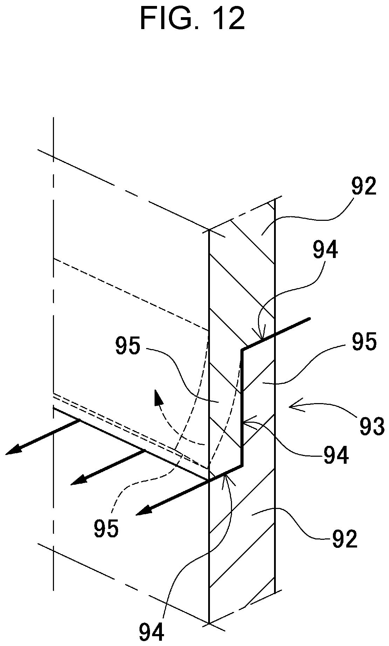

However, in a battery pack including such an exterior case, when an abnormality such as thermal runaway occurs in the accommodated secondary battery cells and a high-temperature and high-pressure gas is released, the inside of the exterior case is filled with the gas, and as indicated by an arrow in Fig. 12, flow path 94 leading from fitting connection portion 93 of exterior case 92 to the outside is generated, and the high-temperature and high-pressure gas is ejected from the flow path to the outside of the case, which may develop into a leakage fire accompanied by ignition. Particularly, in fitting connection portion 93 of the exterior case, since stacked portions 95 are formed thin, when the high pressure gas passes through a boundary of fitting connection portion 93, as indicated by a chain line in Fig. 12, outer stacked portion 95 is easily deformed outward by the gas pressure, so that a large amount of combustible gas is discharged to the outside at once and may be ignited.

Moreover, as a structure in which the box-shaped first case and second case are connected to each other through the openings, it is also possible to adopt a structure in which protrusions protruding outward are provided at facing positions of the outer peripheral surfaces of the openings of the pair of cases, an insertion portion into which a connection screw is inserted is provided in one protrusion, and a connection boss into which the connection screw penetrating the insertion portion is screwed is provided in the other protrusion. The exterior case having this structure has a feature that the protrusions provided at the facing positions of the first case and the second case are tightened with the connection screw, so that the openings can be sandwiched and firmly connected in a direction approaching each other. However, the exterior case having this structure has an adverse effect that the outer shape becomes large because the protrusions protrude on the outer peripheral surfaces. The battery pack having a large outer shape of the exterior case has a disadvantage that the battery pack cannot be disposed in a space-saving manner.

### Citations List

### Patent Literature

PTL 1: Unexamined Japanese Patent Publication No. H10-241647

### SUMMARY OF THE INVENTION

The present disclosure has been developed with the purpose of eliminating the above disadvantage, and an object of the present disclosure is to provide a battery pack capable of suppressing breakage of a connection portion of a case due to an increase in internal pressure of the battery pack caused by a gas discharged due to a battery abnormality.

A battery pack according to an aspect of the present disclosure is a battery pack including an exterior case that accommodates a battery unit, in which the exterior case includes: a first case including a first peripheral wall around a first surface plate; and a second case including a second peripheral wall around a second surface plate, and the first case and the second case accommodate the battery unit inside a closed structure with the first peripheral wall and the second peripheral wall connected at an open end portion. The first peripheral wall and the second peripheral wall are formed by connecting stacking plates stacked on an inner surface and an outer surface to each other in an integral structure along an open end, the first peripheral wall is formed by connecting a first stacking plate stacked on the outer surface, the second peripheral wall is formed by connecting a second stacking plate stacked on the inner surface, and the second stacking plate is provided with a reinforcement mount portion protruding inward on an inner peripheral surface of the open end portion in an integral structure. The battery pack further includes a fixing screw that penetrates and connects the first stacking plate and the second stacking plate stacked on each other, and the fixing screw penetrates the first stacking plate and is screwed into the second stacking plate, and the reinforcement mount portion of the second stacking plate serves as a fixing portion to which the fixing screw is screwed.

The battery pack of the present disclosure has a feature that it is possible to suppress the breakage of a connection portion of the case due to an increase in internal pressure of the battery pack caused by a gas discharged due to a battery abnormality.

### BRIEF DESCRIPTION OF THE DRAWINGS

Fig. 1 is a perspective view illustrating a battery pack according to an exemplary embodiment of the present disclosure.
Fig. 2 is an exploded perspective view of the battery pack of Fig. 1.
Fig. 3 is a vertical cross-sectional view of the battery pack of Fig. 1.
Fig. 4 is a vertical cross-sectional perspective view of the battery pack of Fig. 1.
Fig. 5 is a horizontal cross-sectional perspective view of the battery pack of Fig. 1.
Fig. 6 is an exploded perspective view of a battery holder of a battery unit illustrated in Fig. 2.
Fig. 7 is a cross-sectional view illustrating a state in which a fixing screw is screwed into a connection portion of a stacking plate.
Fig. 8 is an exploded perspective view illustrating another example of an exterior case.
Fig. 9 is an enlarged cross-sectional view illustrating a locking structure of the exterior case illustrated in Fig. 8.
Fig. 10 is a vertical cross-sectional view illustrating another example of the battery pack.
Fig. 11 is an enlarged cross-sectional view illustrating a state in which the stacking plates of the battery pack illustrated in Fig. 10 are connected by a fixing screw.
Fig. 12 is an enlarged cross-sectional perspective view illustrating a state in which a connection portion of an exterior case of a conventional battery pack is broken.

### DESCRIPTION OF EMBODIMENT

A battery pack according to an exemplary embodiment of the present disclosure is a battery pack including an exterior case that accommodates a battery unit, in which the exterior case includes: a first case including a first peripheral wall around a first surface plate; and a second case including a second peripheral wall around a second surface plate, and the first case and the second case accommodate the battery unit inside a closed structure with the first peripheral wall and the second peripheral wall connected at an open end portion. The first peripheral wall and the second peripheral wall are formed by connecting stacking plates stacked on an inner surface and an outer surface to each other in an integral structure along an open end, the first peripheral wall is formed by connecting a first stacking plate stacked on the outer surface, the second peripheral wall is formed by connecting a second stacking plate stacked on the inner surface, and the second stacking plate is provided with a reinforcement mount portion protruding inward on an inner peripheral surface of the open end portion in an integral structure. The battery pack further includes a fixing screw that penetrates and connects the first stacking plate and the second stacking plate stacked on each other, and the fixing screw penetrates the first stacking plate and is screwed into the second stacking plate, and the reinforcement mount portion of the second stacking plate serves as a fixing portion to which the fixing screw is screwed.

According to the above configuration, even in a state where the internal pressure of the exterior case is increased by the gas discharged due to the battery abnormality, there is a feature that the breakage of a connection portion of the case is suppressed, and a combustible gas inside the battery pack is prevented from being released from a mating surface of the cases to the outside of the battery pack, so that the safety can be improved.

This is because, in the above battery pack, the first case and the second case are connected by stacking the first stacking plate connected to the first peripheral wall of the first case and the second stacking plate connected to the second peripheral wall of the second case each other, the second stacking plate is reinforced by providing the reinforcement mount portion protruding inward on the inner peripheral surface of an open end portion of the second stacking plate, the first stacking plate and the second stacking plate stacked each other are connected to each other via the fixing screw, and the reinforcement mount portion of the second stacking plate serves as a fixing portion to which the fixing screw is screwed and the fixing screw penetrating the first stacking plate is screwed into the second stacking plate to fix the first stacking plate and the second stacking plate.

In this structure, the rigidity of the second stacking plate is increased by providing the reinforcement mount portion on the inner surface of the second stacking plate stacked on the inner side, and the first stacking plate and the second stacking plate stacked each other are connected by the fixing screw while the deformation in the connection portion between the first stacking plate and the second stacking plate is suppressed, so that the first stacking plate and the second stacking plate are held in a close contact state, and an exhaust gas can be effectively prevented from leaking from the mating surface of the first stacking plate and the second stacking plate. Moreover, since the fixing screw that connects the first stacking plate and the second stacking plate is screwed with the reinforcement mount portion protruding inside the second stacking plate as the fixing portion in a state of penetrating the first stacking plate and is connected to the second stacking plate, it is possible to more firmly connect the first stacking plate and the second stacking plate by widening a meshing area with the fixing screw. That is, while the second stacking plate is reinforced by the reinforcement mount portion, the reinforcement mount portion is used as the fixing portion to which the fixing screw is screwed, and the fixing screw penetrating the first stacking plate is screwed and fixed to the reinforcement mount portion of the second stacking plate, so that it is possible to suppress the breakage of the connection portion of the case due to the increase in the internal pressure of the battery pack caused by the gas discharged due to the battery abnormality and to secure the safety. Therefore, in a state where the internal pressure of the exterior case is increased, it is possible to prevent a situation where a combustible gas in the case breaks down the connection portion between the first stacking plate and the second stacking plate and is discharged to the outside at once, and to effectively prevent the flame from leaking to the outside.

Moreover, in the battery pack having this structure, the connection portion between the first case and the second case is connected via the fixing screw screwed to the connection portion between the first stacking plate and the second stacking plate in a penetrating direction, so that the first case and the second case can be connected without providing a connection protrusion having a shape protruding toward an outer peripheral surface side of the exterior case. Therefore, this battery package can be disposed in a space-saving manner while having a structure capable of reliably connecting the first case and the second case without increasing the outer shape of the exterior case.

In the battery pack according to another exemplary embodiment of the present disclosure, the fixing screw may include a tapping screw. According to the above configuration, the fixing screw that is the tapping screw is screwed into the reinforcement mount portion without providing a female screw hole in the second stacking plate, whereby the second stacking plate can be easily and reliably connected.

In the battery pack according to another exemplary embodiment of the present disclosure, the first stacking plate and the second stacking plate may coaxially open through-holes for inserting the fixing screw at positions facing each other, and the first stacking plate may be provided with a first through-hole including a through hole, and the second stacking plate may be provided with a second through-hole including a guide hole having an inner diameter smaller than an outer diameter of a threaded portion of the fixing screw.

According to the above configuration, a tip portion of the tapping screw is smoothly guided to the second through-hole, which is the guide hole provided in the reinforcement mount portion of the second stacking plate, while the fixing screw is naturally inserted into the first through-hole, which is the through hole provided in the first stacking plate, so that the tapping screw can be easily and reliably screwed and firmly fixed along the second through-hole.

In the battery pack according to another exemplary embodiment of the present disclosure, the first stacking plate may include a recess that guides a screw head of the fixing screw at an open edge portion of the first through-hole through which the fixing screw is inserted.

According to the above configuration, since the recess that guides the screw head of the fixing screw is provided at the open edge portion of the first through-hole provided in the first stacking plate, it is possible to effectively prevent the screw head of the fixing screw that connects the first stacking plate and the second stacking plate from largely protruding from the outer peripheral surface of the exterior case and increasing the outer shape.

In the battery pack according to another exemplary embodiment of the present disclosure, the screw head of the fixing screw may have a flat plate shape, and the recess provided at the open edge portion of the first through-hole has a depth (h) greater than or equal to a thickness (k) of the screw head.

According to the above configuration, it is possible to prevent the screw head of the fixing screw guided to the recess provided in the first stacking plate from protruding from a surface of the first stacking plate, and to reliably block the outer shape of the exterior case from increasing.

In the battery pack according to another exemplary embodiment of the present disclosure, the first stacking plate may be molded to be thicker than the second stacking plate.

According to the above configuration, by molding the first stacking plate to be thick, deformation of the first stacking plate at the time of discharging the exhaust gas is effectively suppressed, and when the high-pressure gas passes through a boundary of the connection portion, the outer first stacking plate is prevented from being deformed outward by the gas pressure, and it is possible to effectively prevent a large amount of the exhaust gas from being discharged to the outside at once and reaching ignition.

In the battery pack according to another exemplary embodiment of the present disclosure, the reinforcement mount portion may include a projection strip extended along an open edge of the second stacking plate.

According to the above configuration, by forming the reinforcement mount portion provided on the inner peripheral surface of the second stacking plate into a projection strip along the open edge of the second stacking plate, the second stacking plate can be more firmly reinforced, and deformation of the second stacking plate can be suppressed.

In the battery pack according to another exemplary embodiment of the present disclosure, the first peripheral wall of the first case and the second peripheral wall of the second case may have rectangular cross-sectional shapes, and the stacking plate may be provided over an entire circumference of an open edge portion of the peripheral wall, and the stacking plate located on a long side of the peripheral wall having a rectangular shape in a cross-sectional view may be connected by the fixing screw.

According to the above configuration, by connecting the stacking plates located on the long sides of the first case and the second case each having a rectangular cross-sectional shape of the peripheral wall with the fixing screw, the stacking plates on the long sides which are easily deformed with respect to the short sides are reliably connected with the fixing screw, so that there is a feature that it is possible to effectively prevent the breakage of the connection portion of the exterior case.

In the battery pack according to another exemplary embodiment of the present disclosure, the fixing screw may connect a plurality of locations of the stacking plate located on a long side of the peripheral wall having a rectangular shape in a cross-sectional view.

In the battery pack according to another exemplary embodiment of the present disclosure, the first stacking plate and the second stacking plate connected via the fixing screw may be connected by a locking structure. The locking structure may include a locking protrusion provided to protrude from a facing surface of any one of the first stacking plate and the second stacking plate, and a locking portion provided on a facing surface of another of the first stacking plate and the second stacking plate at a position facing the locking protrusion to lock the locking protrusion.

According to the above configuration, the first stacking plate and the second stacking plate connected via the fixing screw are connected by the locking structure, so that there is a feature that the connection portion of the first case and the second case are further firmly connected, and the breakage of the connection portion of the cases due to the increase in the internal pressure of the battery pack can be suppressed. In particular, since the locking structure includes the locking protrusion provided to protrude from the facing surface of any one of the first stacking plate and the second stacking plate, and the locking portion provided on the facing surface of the another of the first stacking plate and the second stacking plate to lock the locking protrusion, the first stacking plate and the second stacking plate are connected in a close contact state via the fixing screw, whereby a feature that the locking protrusion and the locking portion are reliably held in a locked state and the breakage of the connection portion is suppressed is realized.

In the battery pack according to another exemplary embodiment of the present disclosure, the locking protrusion may be provided on an inner peripheral surface of the first stacking plate, the locking portion may include a locking recess provided on an outer peripheral surface of the second stacking plate, and the second stacking plate may include the reinforcement mount portion on an inner peripheral surface facing the locking recess.

According to the above configuration, the locking protrusion is provided on the inner peripheral surface of the first stacking plate, the locking portion includes the locking recess provided on the outer peripheral surface of the second stacking plate, and the reinforcement mount portion is provided on the inner peripheral surface of the second stacking plate facing the locking recess. Therefore, the locking recess can be formed deeply to reliably lock the locking protrusion and the locking recess.

In a battery pack according to another exemplary embodiment of the present disclosure, the battery unit may accommodate a plurality of cylindrical secondary battery cells in a battery holder, the battery holder may accommodate the plurality of secondary battery cells in a state where the secondary battery cells are stacked in a plurality of stages, and on both side surfaces, may form valley portions along an outer shape of the secondary battery cells to be stacked, and the first stacking plate and the second stacking plate may be connected by the fixing screw in a region facing the valley portions of the battery holder.

According to the above configuration, the battery holder formed by accommodating the plurality of cylindrical secondary battery cells in the plurality of stages forms the valley portions along the outer shape of the cylindrical battery cells on both side surfaces, and the first stacking plate and the second stacking plate are connected by the fixing screw in the region facing the valley portions of the battery holder accommodated in the exterior case. Therefore, even if a tip of the fixing screw penetrating the first stacking plate and the second stacking plate enters the inside of the exterior case, the tip of the fixing screw is located in the valley portions of the battery holder and does not come into contact with the battery cells. Therefore, it is possible to realize a feature that the fixing screw can be passed through the reinforcement mount portion and reliably screwed and firmly connected without adversely affecting the secondary battery cells accommodated in the exterior case.

In the battery pack according to another exemplary embodiment of the present disclosure, the battery holder may include a positioning plate that brings a tip of the fixing screw penetrating the first stacking plate and the second stacking plate into contact with the valley portions.

According to the above configuration, the tip of the fixing screw screwed through the first stacking plate and the second stacking plate is brought into contact with the positioning plate provided in the valley portions of the battery holder, whereby there is a feature that the fixing screw can be held in a stable attitude.

Hereinafter, exemplary embodiments of the present disclosure will be described with reference to the drawings. However, the exemplary embodiments described below are examples for embodying the technical idea of the present disclosure, and the present disclosure is not limited to the exemplary embodiments described below. Furthermore, in the present specification, members indicated in the claims are never specified to the members of the exemplary embodiments. In particular, the dimensions, materials, shapes, relative arrangements, and the like of the components described in the exemplary embodiments are not intended to limit the scope of the present disclosure exclusively unless otherwise specified, and are merely illustrative examples. Note that the sizes, positional relationships, or the like of members illustrated in the drawings may be exaggerated for clarity of description. Moreover, in the following description, the same names and reference marks indicate the same or similar members, and detailed description will be appropriately omitted. Moreover, the elements constituting the present disclosure may be configured such that a plurality of elements are constituted of the same member to form one member that functions as the plurality of elements, or conversely, a function of one member can be shared and achieved by a plurality of members.

The battery pack of the present disclosure can be used as a power source for a portable electric device such as an electric cleaner or an electric power tool, or as a backup power source for a server or a power source device for home use, business use, or factory use in stationary power storage, and can also be used as a power source for driving an assist bicycle, an electric scooter, an electric cart, or a power source for driving a vehicle such as a hybrid vehicle or an electric vehicle. Hereinafter, as an exemplary embodiment of the present disclosure, a battery pack used as a power source for a portable electric device will be described.

### [First exemplary embodiment]

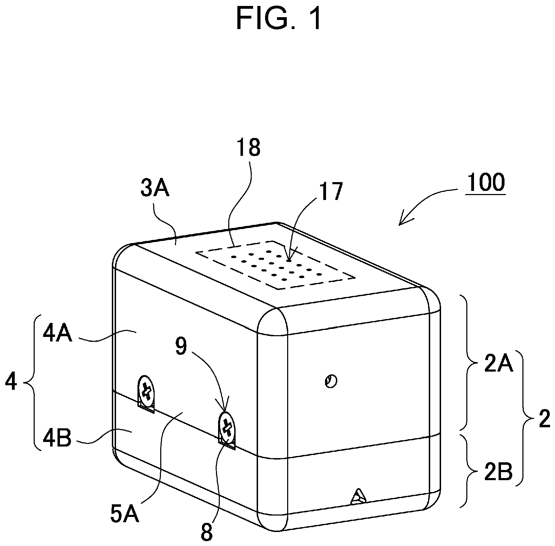

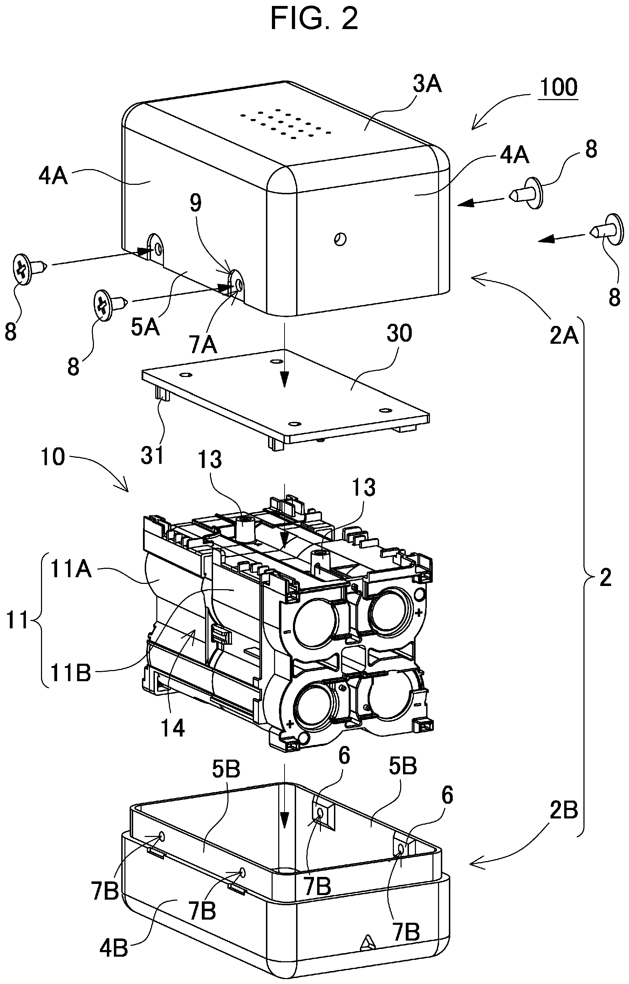

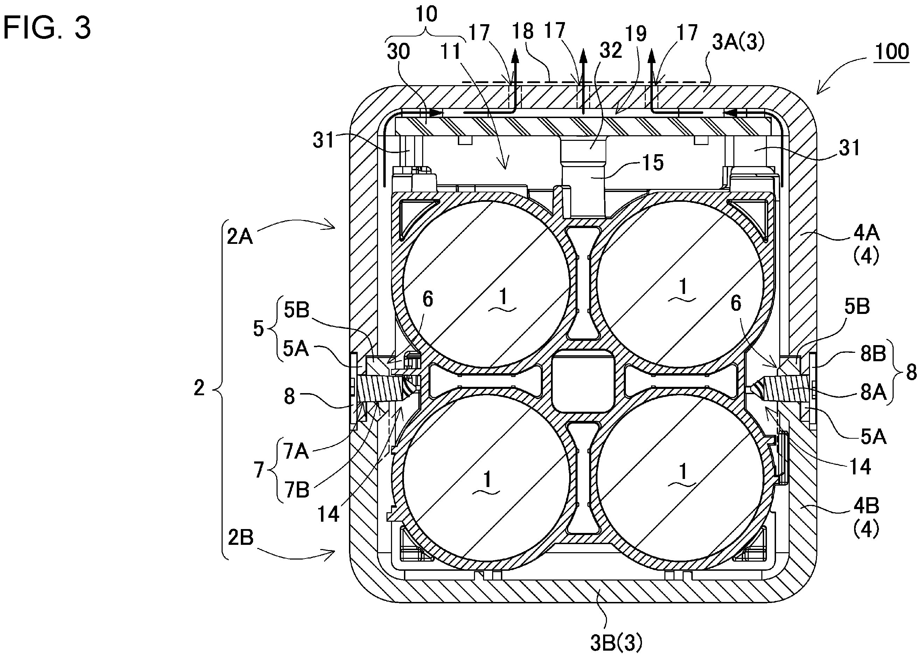

Battery pack 100 according to a first exemplary embodiment of the present disclosure is illustrated in Figs. 1 to 5. Fig. 1 is an external perspective view of a battery pack, Fig. 2 is an exploded perspective view of the battery pack of Fig. 1, Fig. 3 is a vertical cross-sectional view of the battery pack of Fig. 1, and Figs. 4 and 5 are a vertical cross-sectional perspective view and a horizontal cross-sectional perspective view of the battery pack of Fig. 1, respectively. In battery pack 100 illustrated in these drawings, battery unit 10 formed by accommodating a plurality of secondary battery cells 1 is accommodated in exterior case 2.

### (Battery unit 10)

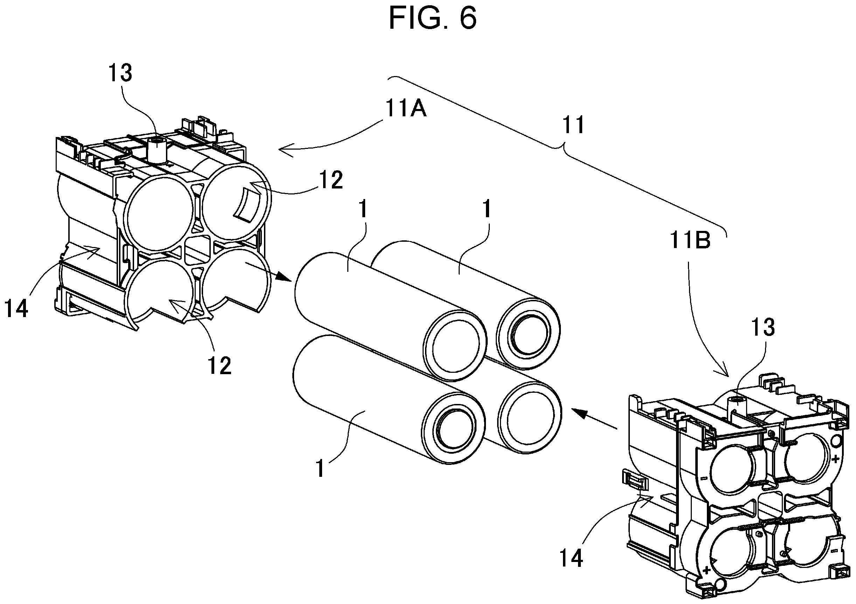

Battery unit 10 accommodates the plurality of secondary battery cells 1 inside battery holder 11 and is disposed at a fixed position. In battery unit 10, an outer shape of battery holder 11 is formed to be slightly smaller than an inner shape of exterior case 2 so as to be accommodated inside exterior case 2. Fig. 6 is an exploded perspective view of battery holder 11. As illustrated in Figs. 2 and 6, battery holder 11 holds secondary battery cells 1 and substrate 30. Battery holder 11 in which secondary battery cells 1 and substrate 30 are set forms battery unit 10. Substrate 30 is placed and fixed on one surface of battery holder 11.

### (Secondary battery cell 1)

Each of secondary battery cells 1 is a cylindrical secondary battery cell whose exterior can has a cylindrical shape. The cylindrical secondary battery cell has electrode surfaces on both end surfaces. Furthermore, a safety valve is provided on one electrode surface. The safety valve is a member that opens when the internal pressure of the exterior can increase and release the internal gas. Note that, although the safety valve is generally provided on the positive electrode side, the present disclosure does not specify a position where the safety valve is provided on the positive electrode side, and may be provided at another position, for example, on the negative electrode side.

As such secondary battery cell 1, a cylindrical lithium ion secondary battery can be suitably used.

However, in the battery pack of the present disclosure, the secondary battery cell is not specified as a cylindrical battery, and is not specified as a lithium ion secondary battery. As the secondary battery cell, all chargeable batteries, for example, a nickel-metal hydride battery and a nickel-cadmium battery can also be used.

### (Battery holder 11)

Battery holder 11 holds the plurality of secondary battery cells 1. Battery holder 11 is divided into two sub-holders 11A, 11B, and sandwiches and holds the plurality of secondary battery cells 1 from a length direction. Each of sub-holders 11A, 11B forms cylindrical accommodation space 12 for accommodating cylindrical secondary battery cells 1. In this example, four secondary battery cells 1 are stacked and held in an attitude of 2 rows ×2 columns. Battery holder 11 in the drawings has a structure in which the plurality of cylindrical secondary battery cells 1 are accommodated in a state of being stacked in a plurality of stages, and valley portions 14 having a shape conforming to the outer shape of stacked cylindrical secondary battery cells 1 are formed on both side surfaces.

The number of secondary battery cells 1 and the stacking method are not limited to this configuration, and three or less secondary battery cells 1 or five or more secondary battery cells 1 may be held. Furthermore, the number of stages is not limited to two, and one stage, that is, all the secondary battery cells may be arranged on the same plane, or three or more stages may be stacked. Furthermore, in addition to the arrangement in a matrix form, the arrangement may be arranged in a staggered manner so as to be alternately arranged in each stage. For example, by disposing the accommodation space in two stages with the center of the cylinder of the accommodation space offset in the upper and lower stages, a thickness of the battery holder can be suppressed. Battery holder 11 is made of a material having excellent insulation properties and heat resistance, and is made of a resin such as polycarbonate or ABS, for example.

Moreover, an upper surface of battery holder 11 is a placement region where substrate 30 is placed. In battery unit 10 illustrated in Fig. 3, substrate 30 is disposed with a gap from an upper surface of battery holder 11. In substrate 30 of Fig. 2, legs 31 are provided at four corner portions of substrate 30 in order to form gaps with a predetermined interval from the upper surface of battery holder 11. Moreover, in battery holder 11, connection bosses 13 for fixing substrate 30 at fixed positions are provided on upper surfaces of sub-holders 11A, 11B.

Substrate 30 is provided on its lower surface with connection portion 32 guided by connection boss 13, and connection portion 32 is guided by connection boss 13 and fixed at a fixed position of battery holder 11. However, in the battery unit, a frame body for holding the substrate may be formed in an installation region of the substrate, or a substrate holder for holding the substrate may be separately provided.

### (Lead plate)

A lead plate (not illustrated) is fixed to an end surface of secondary battery cell 1. The plurality of secondary battery cells 1 are connected in series or in parallel via the lead plate. The lead plate is formed of a metal plate, and is welded to secondary battery cells 1. A lead positioning guide along the outer shape of the lead plate is formed on an inner surface of battery holder 11 so as to position the lead plate at a predetermined position. Note that the lead plate may be disposed not on an inner surface side but on an outer surface side of the battery holder. In this case, after the secondary battery cell is inserted into the accommodation space of the battery holder, the lead plate is fixed to the electrode surface of the secondary battery cell exposed from the battery holder. The output of battery unit 10 including secondary battery cells 1 connected in series or in parallel via the lead plate is output from battery pack 100.

### (Substrate 30)

Electronic circuits such as a voltage detection circuit that detects a total potential or an intermediate potential of battery blocks in which secondary battery cells 1 are connected in series or in parallel, a controlling circuit that controls charging and discharging, and a safety circuit are mounted on substrate 30. Substrate 30 is formed in a rectangular shape.

### (Exterior case 2)

Exterior case 2 that accommodates battery unit 10 is formed in a rectangular parallelepiped box shape. In the examples of Figs. 1 to 5, exterior case 2 is divided into first case 2A and second case 2B, and battery unit 10 is accommodated so as to be sandwiched from above and below. A division direction of first case 2A and second case 2B intersects with a direction in which battery holder 11 is divided into sub-holders 11A, 11B by 90°, so that resistance to impact can be enhanced.

First case 2A and second case 2B illustrated in Figs. 1 to 4 are provided with peripheral wall 4 around front surface plate 3, and have a bottomed box shape with an opening on one side as a whole. In first case 2A and second case 2B, surface plate 3 and peripheral wall 4 are integrally formed of plastic. First case 2A and second case 2B in the drawings are made of a material having excellent insulation properties, for example, a resin such as polycarbonate or ABS. First case 2A includes first peripheral wall 4A around first surface plate 3A, and second case 2B includes second peripheral wall 4B around second surface plate 3B. In first case 2A and second case 2B, first peripheral wall 4A and second peripheral wall 4B are connected at an open end, and battery unit 10 is accommodated inside the closed structure.

Moreover, in first case 2A illustrated in Figs. 1 to 4, a large number of exhaust holes 17 are opened in first surface plate 3A, and by adjusting an amount of gas discharged from any of secondary battery cells 1 accommodated inside battery pack 100 to the outside of exterior case 2, the exhaust gas is suppressed from being jetted to the outside at once, and a situation in which flame leaks to the outside of battery pack 100 is suppressed. In battery pack 100 illustrated in Fig. 3, substrate 30 is disposed on an upper surface of battery unit 10 accommodated inside exterior case 2 at a position facing first surface plate 3A having a large number of exhaust holes 17 opened, limiting gap 19 for limiting a passing amount of an exhaust gas is provided between substrate 30 and first surface plate 3A, and the exhaust gas is passed through limiting gap 19 and discharged to the outside. In this manner, by providing limiting gap 19 between substrate 30 and front surface plate 3 to adjust the amount of the exhaust gas discharged from exhaust hole 17, the momentum of the exhaust gas discharged to the outside is suppressed, and the exhaust gas accumulated inside can be safely discharged to the outside.

As indicated by a chain line in the drawing, a large number of exhaust holes 17 opened in first surface plate 3A are closed by attaching label 18 melted by heat of the discharged gas.

In first case 2A and second case 2B illustrated in Figs. 1 to 4, stacking plates 5 stacked on the inner surface and the outer surface are connected to each other in an integral structure along the open end of each peripheral wall 4. In exterior case 2 in the drawings, the cross-sectional shapes of peripheral walls 4 of first case 2A and second case 2B are substantially rectangular, and stacking plate 5 is provided over the entire circumference of an open edge of peripheral wall 4. First peripheral wall 4A connects first stacking plates 5A stacked on the outer surface, and second peripheral wall 4B connects second stacking plates 5B stacked on the inner surface.

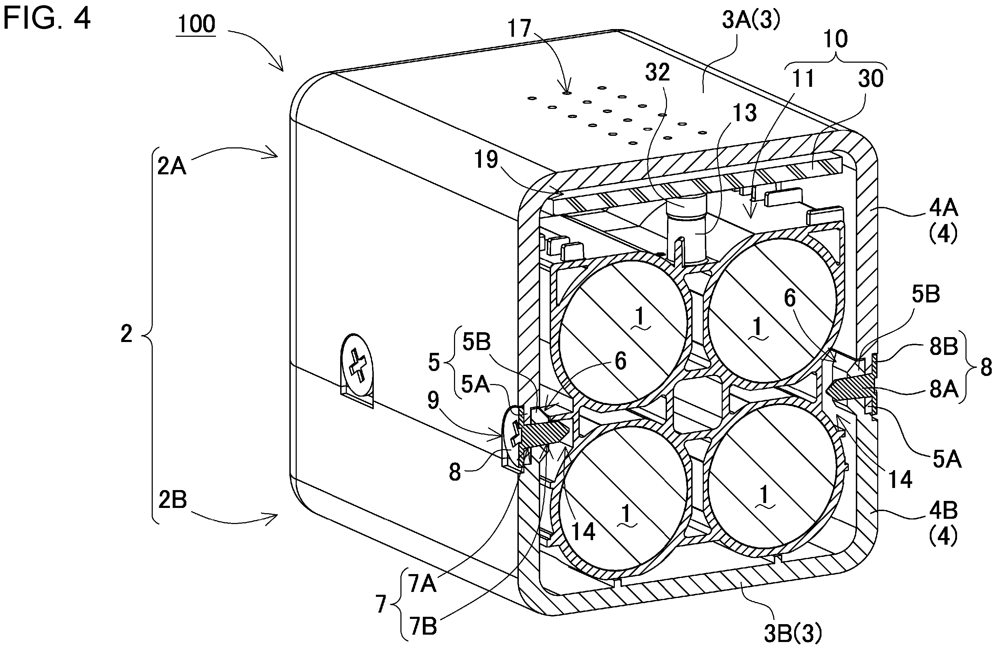

As illustrated in Figs. 3 and 4, first stacking plate 5A is provided in an attitude extending from the open end of first case 2A toward first peripheral wall 4A, and is integrally molded so as to protrude from a tip edge of first peripheral wall 4A in an extending direction of peripheral wall 4. First stacking plate 5A is formed to be thinner than first peripheral wall 4A, and is formed such that the outer surface of first stacking plate 5A is located on the same plane as the outer surface of first peripheral wall 4A, and the inner surface of first stacking plate 5A has a stepped shape lower than the inner surface of first peripheral wall 4A.

As illustrated in Figs. 2 to 4, second stacking plate 5B is provided in an attitude extending from the open end of second case 2B toward second peripheral wall 4B, and is integrally molded so as to protrude from a tip end surface of second peripheral wall 4B in the extending direction of peripheral wall 4. Second stacking plate 5B is formed to be thinner than second peripheral wall 4B, and is formed such that the inner surface of second stacking plate 5B is located on the same plane as the inner surface of second peripheral wall 4B, and the outer surface of second stacking plate 5B has a stepped shape lower than the outer surface of second peripheral wall 4B.

As illustrated in Figs. 3 to 5, first stacking plate 5A and second stacking plate 5B are connected to each other in a stacked state. First stacking plate 5A and second stacking plate 5B are connected to each other by stacking the outer peripheral surface of second stacking plate 5B on the inner peripheral surface of first stacking plate 5A in a surface contact state. In exterior case 2 illustrated in Figs. 3 to 5 and 7, first stacking plate 5A is formed to be thicker than second stacking plate 5B. Thickness (d1) of first stacking plate 5A is larger than 1/2 of a thickness of first peripheral wall 4A, and is 1.2 times or more, preferably 1.5 times or more thickness (d2) of second stacking plate 5B. As described above, exterior case 2 in which first stacking plate 5A is molded to be thick has a feature that deformation of first stacking plate 5A at the time of discharging the exhaust gas can be effectively suppressed. In particular, when the high-pressure exhaust gas passes through a boundary between the connection portions of first stacking plate 5A and second stacking plate 5B, it is possible to effectively prevent first stacking plate 5A from being deformed outward by the gas pressure. On the other hand, thickness (d2) of second stacking plate 5B is smaller than 1/2 of a thickness of second peripheral wall 4B, and is 0.8 times or less, preferably 0.6 times or less thickness (d1) of first stacking plate 5A. As described above, the structure in which second stacking plate 5B is thinly molded is easily deformed at the time of discharging the exhaust gas, but second stacking plate 5B is reinforced by providing reinforcement mount portion 6 on the inner peripheral surface.

### (Reinforcement mount portion 6)

In second peripheral wall 4B, reinforcement mount portion 6 protruding inward is provided on the inner peripheral surface of the open end portion of second stacking plate 5B in an integral structure. Reinforcement mount portion 6 reinforces second stacking plate 5B from the inside to suppress deformation, and is also used as a fixing portion for screwing screw portion 8A of fixing screw 8 for connecting a stacked portion of first stacking plate 5A and second stacking plate 5B, which will be described in detail later. The strength of second stacking plate 5B can be effectively enhanced by enlarging reinforcement mount portion 6. However, when the size of reinforcement mount portion 6 is increased, the size and shape of reinforcement mount portion 6 are determined in consideration of the manufacturing process and the assembly process because reinforcement mount portion 6 is restricted in the manufacturing process and the assembly process. For example, as illustrated in Fig. 2, protruding amount (t) of reinforcement mount portion 6 protruding inward from second stacking plate 5B of second case 2B is specified such that battery holder 11 can be easily inserted from an opening portion into second case 2B having an upper opening. In other words, protruding amount (t) of reinforcement mount portion 6 provided on second stacking plate 5B can be increased to the maximum within a range in which battery holder 11 can be inserted from the opening of second case 2B.

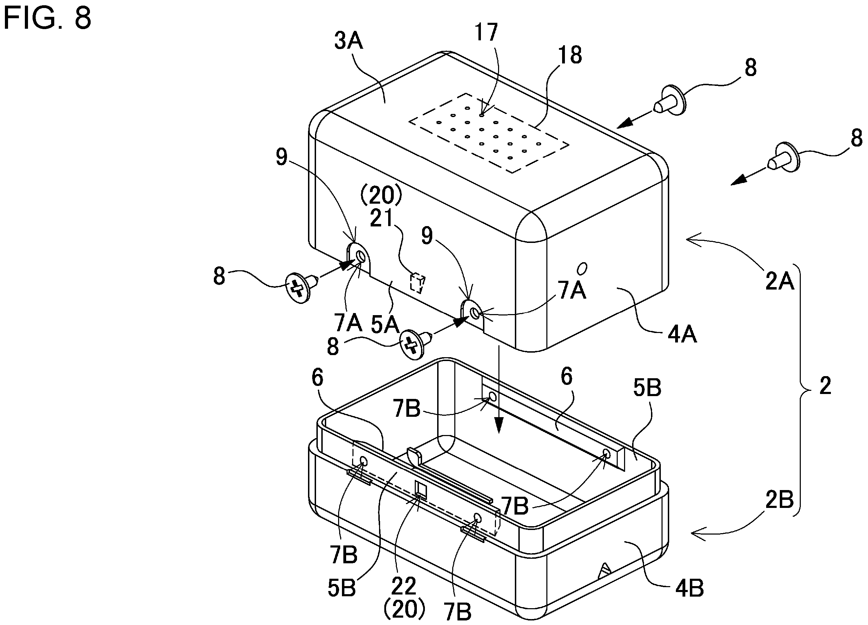

In exterior case 2 illustrated in Fig. 2, second stacking plate 5B has a substantially rectangular cross-sectional shape, and reinforcement mount portions 6 are provided at two positions on the inner peripheral surface of second stacking plate 5B positioned on a long side of the rectangle. Second stacking plate 5B illustrated in Fig. 2 has a quadrangular frustum shape as a whole, and is provided at both end portions of a long side of a rectangle. An area of reinforcement mount portion 6 having this shape is gradually reduced in the projecting direction while increasing the bottom surface, so that excellent strength can be realized while securing a volume of the reinforcement mount portion. However, the reinforcement mount portion may have a truncated cone shape or a rectangular parallelepiped shape. It is also possible to have a shape obtained by partially cutting a cylinder or a sphere. In the exterior case illustrated in Fig. 2, two reinforcement mount portions 6 are provided for second stacking plate 5B on one side, but one reinforcement mount portion 6 may be provided for second stacking plate 5B on one side, or three or more reinforcement mount portions 6 may be provided for second stacking plate 5B on one side. Reinforcement mount portion 6 illustrated in Fig. 8 is a projection strip extended along the open edge of second stacking plate 5B. Exterior case 2 including reinforcement mount portion 6 having such a shape further has a feature that deformation of second stacking plate 5B is suppressed and breakage of the stacked portion can be more effectively suppressed.

Moreover, as indicated by a chain line in Fig. 3, reinforcement mount portion 6 can be provided extending from the inner surface of second stacking plate 5B to the inner surface of second peripheral wall 4B. As described above, the structure in which reinforcement mount portion 6 is extended to second peripheral wall 4B has a feature that the cross-sectional secondary moment in a bending direction in the cross section can be increased and the deformation in the outer direction can be further suppressed. Therefore, even when the gas is discharged from any of secondary battery cells 1 accommodated inside exterior case 2 and a force that deforms second stacking plate 5B from the inside to the outside acts, reinforcement mount portion 6 can suppress the deformation of second stacking plate 5B, effectively prevent the breakage of the connection portion of exterior case 2, and effectively prevent the exhaust gas from being ejected to the outside at once.

Here, in the second stacking plate having no reinforcement mount portion on the inner surface, when the pressure inside the exterior case increases, the entire second stacking plate is uniformly curved, and the deformation amount of the central portion increases. On the other hand, in the second stacking plate in which the reinforcement mount portion is provided on the inner surface, even when the internal pressure of the exterior case increases, the deformation of a region where the reinforcement mount portion is provided is partially suppressed, so that the deformation of the entire second stacking plate is suppressed without uniformly curving the entire second stacking plate, and the deformation amount of the central portion decreases. Therefore, the second stacking plate is provided with the reinforcement mount portion protruding inward, so that deformation of the second stacking plate as a whole is suppressed, and the breakage of this portion is suppressed.

### (Fixing screw 8)

Moreover, in exterior case 2 illustrated in Figs. 1 to 5 and 7, a stacked portion of first stacking plate 5A and second stacking plate 5B stacked on each other is fixed via fixing screw 8. In exterior case 2 illustrated in the drawings, fixing screw 8 is screwed from the outside toward the inside in the stacked portion of first stacking plate 5A and second stacking plate 5B, and fixing screw 8 penetrating first stacking plate 5A is screwed into second stacking plate 5B, thereby connecting first stacking plate 5A and second stacking plate 5B in a state of being in close contact with each other. Moreover, in exterior case 2 illustrated in the drawings, fixing screw 8 which penetrates first stacking plate 5A and is screwed into second stacking plate 5B is screwed into reinforcement mount portion 6 to be fixed thereto. That is, reinforcement mount portion 6 provided on the inner peripheral surface of second stacking plate 5B is also used as a fixing portion to which fixing screw 8 is screwed.

A tapping screw is preferably used as fixing screw 8. Fixing screw 8 that is a tapping screw has a feature that fixing screw 8 can be fixed to reinforcement mount portion 6 by screwing screw portion 8A without providing a female screw hole in the fixing portion into which screw portion 8A is screwed. Moreover, in fixing screw 8 illustrated in the drawings, screw head 8B has a flat plate shape. By forming screw head 8B into a flat plate shape, screw head 8B can be thinned, and an amount of protrusion from the surface of exterior case 2 in a state where fixing screw 8 is screwed can be reduced.

### (Through-hole 7)

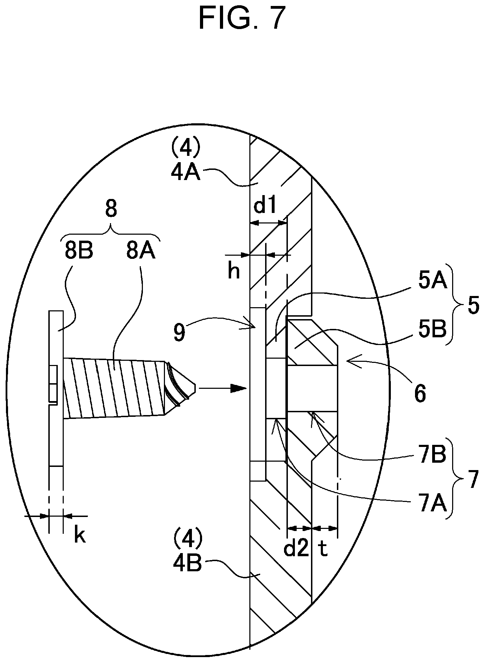

In first stacking plate 5A and second stacking plate 5B illustrated in Fig. 7, through-holes 7 for inserting fixing screws 8 are coaxially opened at positions facing each other in the stacked portion. First through-hole 7A is opened in first stacking plate 5A. First through-hole 7A is a through-hole through which fixing screw 8 can be smoothly inserted without difficulty. Second through-hole 7B is opened in second stacking plate 5B. Second through-hole 7B is a guide hole having an inner diameter smaller than an outer diameter of screw portion 8A of fixing screw 8. For example, second through-hole 7B has a structure in which fixing screw 8 can be fixed to reinforcement mount portion 6 by screwing screw portion 8A without passing screw portion 8A of fixing screw 8 with low resistance. Second through-hole 7B, which is a guide hole, can guide a tip portion of screw portion 8A of fixing screw 8 to a fixed position and screw fixing screw 8 to an accurate position. In second through-hole 7B illustrated in Fig. 7, screw portion 8A is screwed while smoothly guiding the tip portion of fixing screw 8, so that a rear end portion of screw portion 8A can be reliably fixed by being screwed with a large resistance. Although second through-hole 7B in Fig. 7 has a uniform inner diameter, second through-hole 7B as a guide hole can be a tapered hole or a stepped hole, for example.

### (Recess 9)

Moreover, in first stacking plate 5A illustrated in Figs. 2 and 7, recess 9 for guiding screw head 8B of fixing screw 8 is provided at an open edge portion of first through-hole 7A into which fixing screw 8 is inserted. Since screw head 8B of the fixing screw 8 illustrated in the drawings has a flat plate shape, entire recess 9 in the drawings has uniform depth (h), and depth (h) is greater than or equal to thickness (k) of screw head 8B. Recess 9 having this shape can prevent screw head 8B of fixing screw 8 that connects first stacking plate 5A and second stacking plate 5B from largely protruding from the outer peripheral surface of exterior case 2, and can effectively prevent the outer shape of battery pack 100 from becoming large. However, the fixing screw may slightly protrude from the surface of the exterior case.

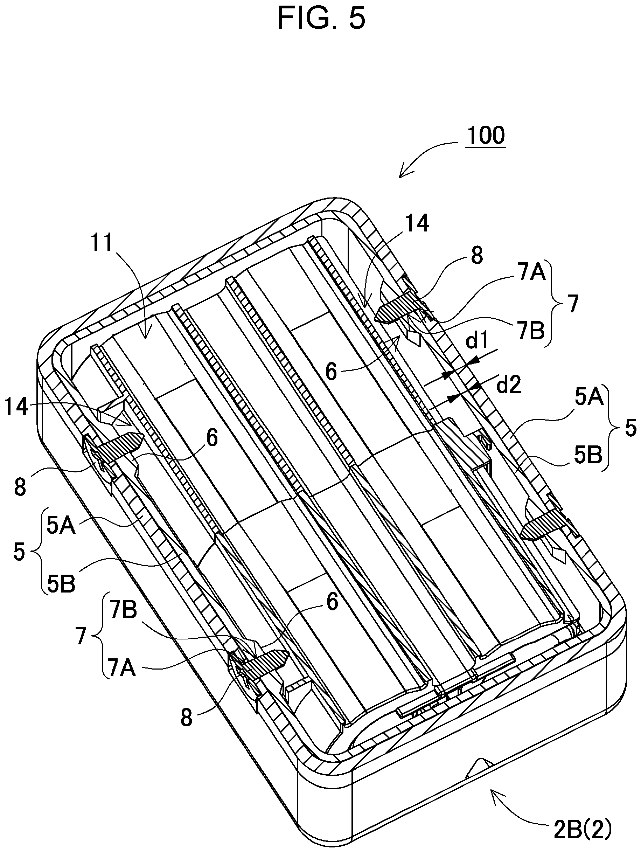

As illustrated in Figs. 2 and 5, in exterior case 2 described above, first peripheral wall 4A of first case 2A and second peripheral wall 4B of second case 2B have rectangular cross-sectional shapes, and stacking plate 5 is provided over the entire circumference of the open end portion of peripheral wall 4. Moreover, stacking plates 5 located on the long side of the peripheral wall 4 having a rectangular shape in the cross section are connected and fixed by fixing screws 8. As described above, the structure in which stacking plates 5 located on the long sides of the first case 2A and the second case 2B having the rectangular cross-sectional shape of peripheral wall 4 are fixed by the fixing screws 8 has a feature that stacking plates 5 on the long sides that are easily deformed with respect to the short sides can be reliably connected by fixing screws 8. However, in the exterior case, the stacking plate located on the short side of the rectangular peripheral wall can be fixed with a fixing screw. In this structure, the stacking plates are connected with the fixing screws over the entire circumference of the peripheral wall, and the breakage of the connection portion of the exterior case can be more effectively prevented.

Moreover, in the battery pack described above, a plurality of locations of stacking plate 5 located on the long side of peripheral wall 4 having a rectangular shape in the cross section are connected and fixed by fixing screws 8. In battery pack 100 illustrated in the drawings, two locations of stacking plate 5 located on the long side are fixed with fixing screws 8. However, in the battery pack, one location or three or more locations of stacking plate 5 located on the long side can be fixed with fixing screws 8.

Moreover, in battery pack 100 in which stacking plates 5 located on the long side are connected by fixing screws 8, as illustrated in Fig. 3, fixing screws 8 connecting stacking plates 5 are located to face valley portions 14 of battery holder 11 accommodated in exterior case 2. In battery unit 10 illustrated in Figs. 2 and 6, the plurality of cylindrical secondary battery cells 1 are accommodated in battery holder 11, and battery holder 11 accommodates the plurality of secondary battery cells 1 in a state where secondary battery cells 1 are stacked in a plurality of stages, and valley portions 14 along the outer shape of stacked secondary battery cells 1 are formed on both side surfaces. In battery pack 100, first stacking plate 5A and second stacking plate 5B are connected by fixing screw 8 in a region facing valley portion 14 of battery holder 11. Therefore, even if the tip of fixing screw 8 penetrating first stacking plate 5A and second stacking plate 5B enters the inside of exterior case 2, the tip of fixing screw 8 is located in valley portion 14 of battery holder 11, so that the tip does not come into contact with secondary battery cell 1. Therefore, without adversely affecting secondary battery cells 1 accommodated in exterior case 2, fixing screws 8 can be passed through reinforcement mount portion 6 and reliably screwed, and secondary battery cells 1 can be firmly connected.

### (Locking structure 20)

Moreover, in battery pack 100, first stacking plate 5A and second stacking plate 5B connected via fixing screw 8 can be connected by a locking structure. The locking structure may be, for example, a locking protrusion provided so as to protrude from a facing surface of any one of first stacking plate 5A and second stacking plate 5B, and a locking portion provided on a facing surface of the other of first stacking plate 5A and second stacking plate 5B at a position facing the locking protrusion to lock the locking protrusion. The locking portion may be a locking recess or a locking hole capable of locking the locking protrusion.

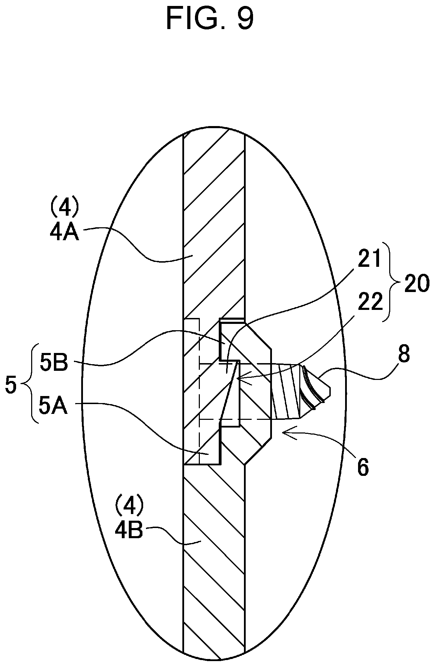

Figs. 8 and 9 illustrate an example in which first stacking plate 5A and second stacking plate 5B are connected by locking structure 20. Locking structure 20 illustrated in the drawings includes locking protrusion 21 provided on the inner peripheral surface of first stacking plate 5A and locking recess 22 provided on the outer peripheral surface of second stacking plate 5B. In locking structure 20, locking protrusion 21 provided on first stacking plate 5A is formed into a hook shape, and locking recess 22 provided on second stacking plate 5B is formed into a recess having a rectangular cross-sectional view capable of guiding hook-shaped locking protrusion 21 in a locked state. Moreover, locking structure 20 illustrated in Fig. 8 is provided on stacking plate 5 located on the long side and connected via fixing screw 8. As described above, in the structure in which stacking plates 5 connected by fixing screws 8 are locked by locking structure 20, first stacking plate 5A and second stacking plate 5B are connected in a close contact state via fixing screws 8, so that a feature that locking protrusion 21 and locking recess 22 are reliably held in the locked state is realized.

Moreover, in second stacking plate 5B illustrated in Figs. 8 and 9, reinforcement mount portion 6 is provided on the inner peripheral surface facing locking recess 22 provided in second stacking plate 5B. Reinforcement mount portion 6 illustrated in Fig. 8 also serves as a fixing portion for screwing fixing screw 8 as a projection strip extended along the open edge of second stacking plate 5B, but reinforcement mount portion 6 may be provided at a position facing locking recess 22 to reinforce the locking recess. As described above, the structure in which reinforcement mount portion 6 is provided opposite to the position where locking recess 22 is provided has a feature that locking recess 22 can be formed deeply, so that a protruding amount of locking protrusion 21 can be increased, and locking protrusion 21 can be more reliably locked to locking recess 22 and hardly detached. For example, second stacking plate 5B formed thinner than second peripheral wall 4B is restricted in the depth of locking recess 22 by the thickness of second stacking plate 5B, but the locking recess can be provided at an ideal depth by providing reinforcement mount portion 6 at the position of locking recess 22.

### (Positioning plate 16)

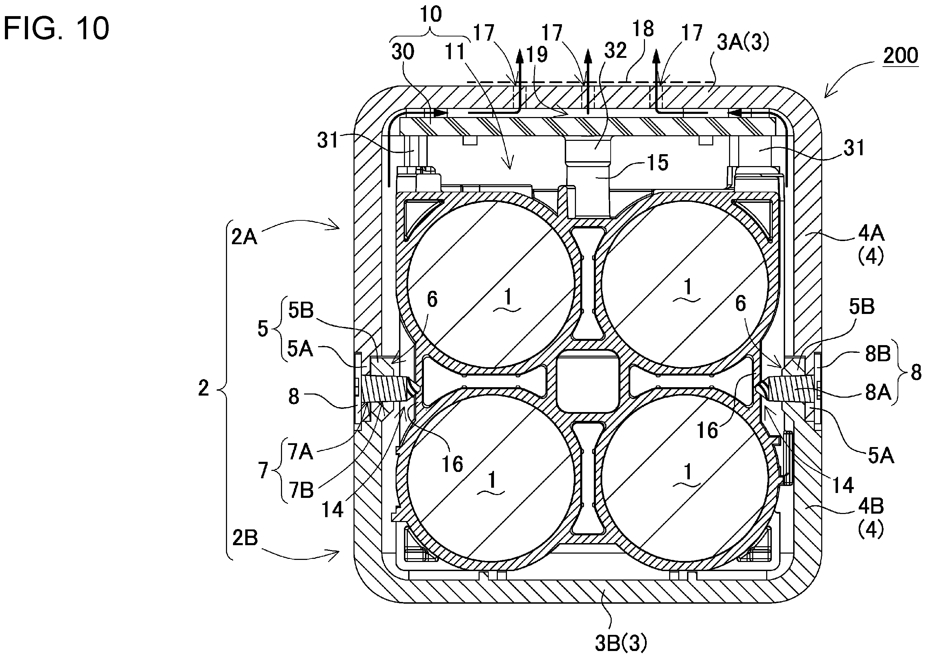

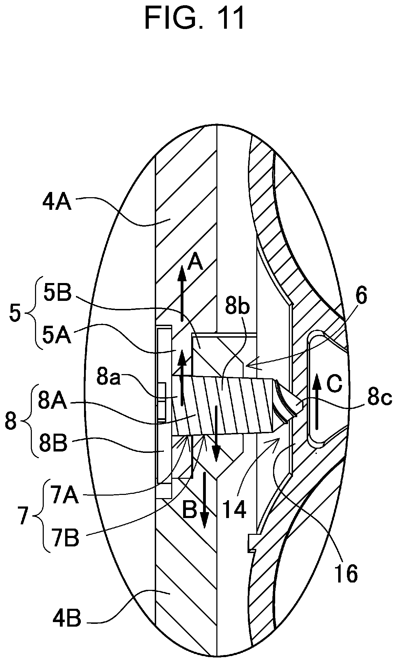

Moreover, the battery pack may have a structure illustrated in Figs. 10 and 11. In battery pack 200 illustrated in these drawings, valley portion 14 of battery holder 11 is provided with positioning plate 16 that brings the tip of fixing screw 8 penetrating first stacking plate 5A and second stacking plate 5B into contact with each other. Positioning plate 16 illustrated in the drawings is provided at a position where the tip of fixing screw 8 screwed through first stacking plate 5A and second stacking plate 5B abuts or comes into contact in a pressed state. Although positioning plate 16 illustrated in the drawings is a part of battery holder 11, positioning plate 16 may be disposed as a separate member from the battery holder.

As described above, the tip of fixing screw 8 screwed into stacking plate 5 comes into contact with positioning plate 16, so that there is a feature that the attitude of fixing screw 8 can be correctly held. As illustrated in Fig. 11, when the pressure inside exterior case 2 increases, first peripheral wall 4A is pulled in a direction indicated by arrow A, and second peripheral wall 4B is pulled in a direction indicated by arrow B due to the reaction, screw portion 8A of fixing screw 8 is in a state where rear end portion 8a is pulled in the direction indicated by the arrow A, and intermediate portion 8b is pulled in the direction indicated by arrow B. At this time, screw portion 8A of fixing screw 8 receives a force in a direction inclined from the horizontal attitude. However, as illustrated in Fig. 11, tip portion 8c of screw portion 8A comes into contact with positioning plate 16, so that the force is received in a direction indicated by arrow C in the drawing, and the inclination of screw portion 8A is suppressed. Therefore, screw portion 8A can be held in a stable attitude by providing positioning plate 16 with which tip portion 8c of fixing screw 8 comes into contact.

### INDUSTRIAL APPLICABILITY

The battery pack according to the present disclosure can be suitably used as a power source of a portable electric device such as an electric cleaner or an electric tool. Furthermore, the present disclosure can be appropriately used for applications such as a power source device for a moving body such as an assist bicycle and an electric cart.

### REFERENCE MARKS IN THE DRAWINGS

100, 200: battery pack
1: secondary battery cell
2: exterior case
2A: first case
2B: second case
3: surface plate
3A: first surface plate
3B: first surface plate
4: peripheral wall
4A: first peripheral wall
4B: second peripheral wall
5: stacking plate
5A: first stacking plate
5B: second stacking plate
6: reinforcement mount portion
7: through-hole
7A: first through-hole
7B: second through-hole
8: fixing screw
8A: screw portion
8a: rear end portion
8b: intermediate portion
8c: tip portion
8B: screw head
9: recess
10: battery unit
11: battery holder
11A, 11B: sub-holder
12: accommodation space
13: connection boss
14: valley portion
16: positioning plate
17: exhaust hole
18: label
19: limiting gap
20: locking structure
21: locking protrusion
22: locking recess
30: substrate
31: leg
32: connection portion
92: exterior case
93: fitting connection portion
94: flow path
95: stacked portion

## Claims

1. A battery pack comprising an exterior case that accommodates a battery unit,
wherein the exterior case includes
a first case including a first peripheral wall around a first surface plate, and
a second case including a second peripheral wall around a second surface plate,
the first case and the second case form a closed structure by being connected with each other at open end portions of the first and second peripheral walls, and accommodate the battery unit inside the closed structure,
the first peripheral wall and the second peripheral wall are formed by connecting stacking plates stacked on an inner surface and an outer surface to each other in an integral structure along an open end,
the first peripheral wall is formed by connecting a first stacking plate stacked on the outer surface,
the second peripheral wall is formed by connecting a second stacking plate stacked on the inner surface,
the second stacking plate is provided with a reinforcement mount portion protruding inward on an inner peripheral surface of the open end portion in an integral structure,
the battery pack further includes a fixing screw that penetrates and connects the first stacking plate and the second stacking plate stacked on each other, and
the fixing screw penetrates the first stacking plate and is screwed into the second stacking plate, and the reinforcement mount portion of the second stacking plate serves as a fixing portion to which the fixing screw is screwed.

2. The battery pack according to Claim 1, wherein the fixing screw includes a tapping screw.

3. The battery pack according to Claim 2, wherein
the first stacking plate and the second stacking plate coaxially open through-holes for inserting the fixing screw at positions facing each other, and
the first stacking plate is provided with a first through-hole including a through hole, and the second stacking plate is provided with a second through-hole including a guide hole having an inner diameter smaller than an outer diameter of a threaded portion of the fixing screw.

4. The battery pack according to Claim 3, wherein the first stacking plate includes a recess that guides a screw head of the fixing screw at an open edge portion of the first through-hole through which the fixing screw is inserted.

5. The battery pack according to Claim 4, wherein the screw head of the fixing screw has a flat plate shape, and the recess provided at the open edge portion of the first through-hole has a depth (h) greater than or equal to a thickness (k) of the screw head.

6. The battery pack according to any one of Claims 1 to 5, wherein the first stacking plate is formed to be thicker than the second stacking plate.

7. The battery pack according to any one of Claims 1 to 6, wherein the reinforcement mount portion includes a projection strip extended along an open edge of the second stacking plate.

8. The battery pack according to any one of Claims 1 to 7, wherein
the first peripheral wall of the first case and the second peripheral wall of the second case have rectangular cross-sectional shapes, and at least one of the stacking plates is provided over an entire circumference of an open edge portion of at least one of the first and second peripheral walls, and
the at least one of the stacking plates located on a long side of the at least one of the first and second peripheral walls having a rectangular shape in a cross-sectional view is connected by the fixing screw.

9. The battery pack according to Claim 8, wherein a plurality of the fixing screws connect a plurality of locations of the at least one of the stacking plates located on the long side of the at least one of the first and second peripheral walls having the rectangular shape in the cross-sectional view.

10. The battery pack according to any one of Claims 1 to 9, wherein
the first stacking plate and the second stacking plate connected via the fixing screw are connected by a locking structure, and
the locking structure includes
a locking protrusion provided to protrude from a facing surface of any one of the first stacking plate and the second stacking plate, and
a locking portion provided on a facing surface of another of the first stacking plate and the second stacking plate at a position facing the locking protrusion to lock the locking protrusion.

11. The battery pack according to Claim 10, wherein
the locking protrusion is provided on an inner peripheral surface of the first stacking plate,
the locking portion includes a locking recess provided on an outer peripheral surface of the second stacking plate, and
the second stacking plate includes the reinforcement mount portion on an inner peripheral surface facing the locking recess.

12. The battery pack according to any one of Claims 1 to 11, wherein
the battery unit accommodates a plurality of cylindrical secondary battery cells in a battery holder,
the battery holder accommodates the plurality of secondary battery cells in a state where the secondary battery cells are stacked in a plurality of stages, and on both side surfaces, forms valley portions along an outer shape of the secondary battery cells to be stacked, and
the first stacking plate and the second stacking plate are connected by the fixing screw in a region facing the valley portions of the battery holder.

13. The battery pack according to Claim 12, wherein the battery holder includes a positioning plate that brings a tip of the fixing screw penetrating the first stacking plate and the second stacking plate into contact with the valley portions.
